# EUROPÄISCHE PATENTSCHRIFT

(11) **EP 1 134 095 B1**
(45) Veröffentlichungstag und Bekanntmachung des Hinweises auf die Patenterteilung: **24.05.2006**
(21) Anmeldenummer: 01102359.5
(22) Anmeldetag: 02.02.2001
(51) Int. Cl.: B60B 3/06, B60B 3/04, B60B 3/10, B60B 1/12

(54) **Mehrteiliges Fahrzeugrad**
Multi-part vehicle wheel
Roue de véhicule en plusieurs parties

(30) Priorität: 16.03.2000 DE 10012890
(43) Veröffentlichungstag der Anmeldung: 19.09.2001
(73) Patentinhaber: Dr.Ing. h.c.F. Porsche Aktiengesellschaft, 70435 Stuttgart (DE)
(72) Erfinder: Hummel, Frank, 72800 Eningen (DE); Stach, Jens, 71296 Heimsheim (DE)

(56) Entgegenhaltungen:
- WO-A-00/76786
- DE-A- 4 138 558
- DE-A- 4 201 838
- DE-A- 19 754 959

## Beschreibung

Die Erfindung bezieht sich auf ein mehrteiliges Rad für ein Kraftfahrzeug nach dem Oberbegriff des Anspruchs 1.

Aus der gattungsgemäßen DE 197 54 959 A1 ist ein einteiliges Rad für ein Kraftfahrzeug mit Hohlspeichen und Ringkanälen bekannt, in denen jeweils ein verbleibender Kern aus Metallschaum angeordnet ist. Dieser Metallschaumkern wird beim Gießen des Rades in einem Kokillenwerkzeug statt eines entfernbaren Sandkernes verwendet.

Aufgabe der Erfindung ist es, ein mehrteiliges Rad für ein Kraftfahrzeug zu schaffen, bei dem eine positionierte Lage des in den Hohlräumen des Rades verbleibenden Metallschaumkernes zu gewährleisten und darüber hinaus eine optimale Abdichtung dieses Metallschaumkerns gegen äußere Einflüsse bei einem zusammengebauten Fahrzeugrad zu erzielen.

Diese Aufgabe wird erfindungsgemäß durch die Merkmale des Anspruchs 1 gelöst. Weitere vorteilhafte Merkmale beinhalten die Unteransprüche.

Ein genaues Positionieren des Metallschaumkerns nach der Erfindung in einer Gußkokille wird durch sogenannte vom Kern vorragende oder verteilt angeordnete Nadelstifte erzielt. Diese Positioniermittel sind nach dem Gießen des Rades in die Radwandung, in diesem Fall in die Wandung der Hohlräume integriert, das heißt eingegossen. Der Metallschaumkern kann seine Lage somit nicht mehr im Hohlraum, der Radspeiche oder in einem Ringraum des Rades verändern.

Des Weiteren kann zusätzlich der Metallschaumkern im Kokillenwerkzeug durch ein aus den Hohlspeichen im Bereich der Radmitte bzw. der Radmittenöffnung herausgeführtes Kernteil erfolgen. Auch kann die Lagerung des Metallschaumkerns im Kokillenwerkzeug über ein aus der Hohlspeiche im Bereich einer Radschraubenbohrung herausgeführtes Kernteil erfolgen. Nachdem das Rad fertig gegossen ist, und dieses Kernteil entsprechend den Erfordernissen abgeschnitten ist, ist beispielsweise die Radschraubenbohrung und die zentrale Radöffnung durchgängig.

Das so mit einem Metallschaumkern hergestellte Fahrzeugrad kann mehrteilig ausgebildet sein, wobei der Felgenstern getrennt von der Felge im Kokillenwerkzeug gegossen wird. Die Felge kann auch in einem anderen Verfahren hergestellt werden, beispielsweise durch ein Auswalzen.

In einer ersten Ausführung nach der Erfindung ist der Felgenstern mit etwa parallel verlaufenden randseitigen Ringflächen versehen, zwischen denen die Hohlspeichen als auch die Luftöffnungen angeordnet sind. Mindestens eine dieser Ringflächen ist mit der Felge flächig über Schraubmittel verbunden, wozu die Felge entsprechend mit winkelförmigen Flächen ausgeführt ist. Die innere Ringfläche stößt stirnseitig an eine Felgenunterfläche und kann beispielsweise stoffschlüssig mit der Felge verbunden werden.

Nach einer weiteren Ausführung der Erfindung weist die innere Ringfläche einen abgewinkelten Ringsteg auf, der sich flächig an die Unterfläche der Felge anlegt. Hierdurch wird in vorteilhafter Weise eine zweite Verschraubungsfläche zur Felge erzielt. Die erste Verschraubungsfläche wird durch die äußere Ringfläche erreicht.

Damit der Metallschaumkern und der Hohlraum gegen äußere Einflüsse geschützt ist, wird zwischen den Verbindungsflächen vom Felgenstern und der Felge ein Dichtband bzw. ein Dichtring angeordnet. Somit wird beim Verbinden der beiden Radteile, wie der Felge und dem Felgenstern das Dichtband eingeklemmt gehalten.

Wenn die Hohlspeiche nicht mit Metallschaum gefüllt sind, kann bei den beiden Ausführungsvarianten der Räder ebenfalls ein Dichtband zwischengeschaltet sein, damit der Hohlraum gegen äußere Einflüsse geschützt wird.

Die Hohlspeiche kann statt der Öffnung auch über eine Wandung abgeschlossen sein, die dann an der Unterfläche der Felge abgestützt ist.

Ausführungsbeispiele der Erfindung sind in den Zeichnungen dargestellt und werden im Folgenden näher beschrieben.

Es zeigen
- Fig. 1: eine erste Ausführung eines Rades mit einer radialen ersten Ringfläche und einem beabstandeten abgewinkelten zweiten Ringfläche und einem Metallschaumkern,
- Fig. 2: eine zweite Ausführung eines Rades mit einer radialen ersten Ringfläche und einer beabstandeten zweiten radialen Ringfläche und einem Metallschaumkern,
- Fig. 3 und 4: Ausführungen gemäß der Fig. 1 und 2 ohne Metallschaumkern,
- Fig. 5: eine Ausführung des Metallschaumkerns mit Kernmarken entsprechend auch für die Räder gemäß Fig. 2,
- Fig. 6: eine Ausführung des Metallschaumkerns mit Nadeln als Kernmarken entsprechend auch für die Räder gemäß Fig. 2,
- Fig. 7 und 8: Metallschaumkerne mit Abstützungen im Kokillenwerkzeug.

Ein mehrteiliges Rad 1, 2 umfaßt einen Felgenstern 3, 4 sowie eine Felge 5, die miteinander beispielsweise über mindestens eine Schraubverbindung verbunden sind. In den Hohlspeichen H bzw. in Ringräumen des Rades 1, 2 ist jeweils ein Metallschaumkern M angeordnet.

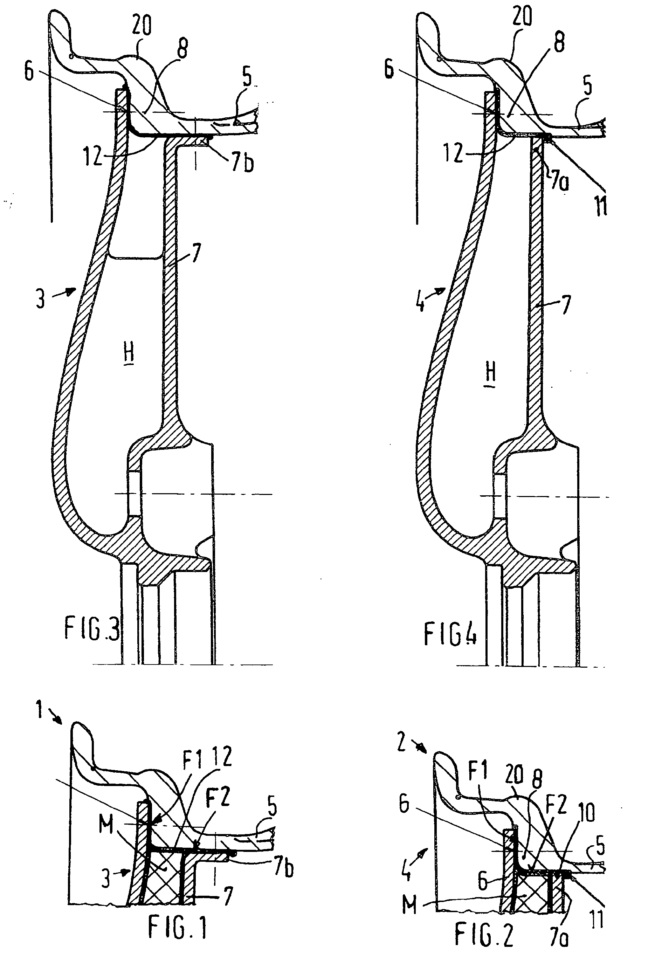

Nach einer ersten Ausführung gemäß der Fig. 1 ist der Felgenstern 3 mit einer äußeren sich radial erstreckenden ersten Ringfläche 6 versehen, welchen einer beabstandeten zweiten Ringfläche mit einem abgewinkelten Steg 7b gegenübersteht. Diese beiden Ringflächen 6 und 7, 7b schließen einen etwa rechten Winkel ein, in der eine entsprechend ausgeführte Felgenkante 8 angeordnet ist. Eine Verbindung der Ringflächen 6, 7, 7b mit Flächen F1 und F2 der Felgenkante 8 erfolgt über Schrauben, die über den Umfang des Rades 1, 2 gleichmäßig verteilt angeordnet sind.

Nach einer weiteren Ausführung gemäß Fig. 2 verläuft die äußere Ringfläche 6 entsprechend der Ausführung gemäß Fig. 1, wogegen die innere Ringfläche 7a radial nach außen - ohne Abwinklung 7b - verläuft. Die äußere Ringfläche 6 bildet mit der Stirnkante 10 der Ringfläche 7a eine winkelige Aufnahme für die Felgenkante 8. Eine Verschraubung erfolgt nur über die Ringfläche 6 an der Fläche F1 wobei die Stirnkante 10 der Ringfläche 7a an der Fläche F2 von unten her anstößt oder zu dieser freiliegend angeordnet ist.

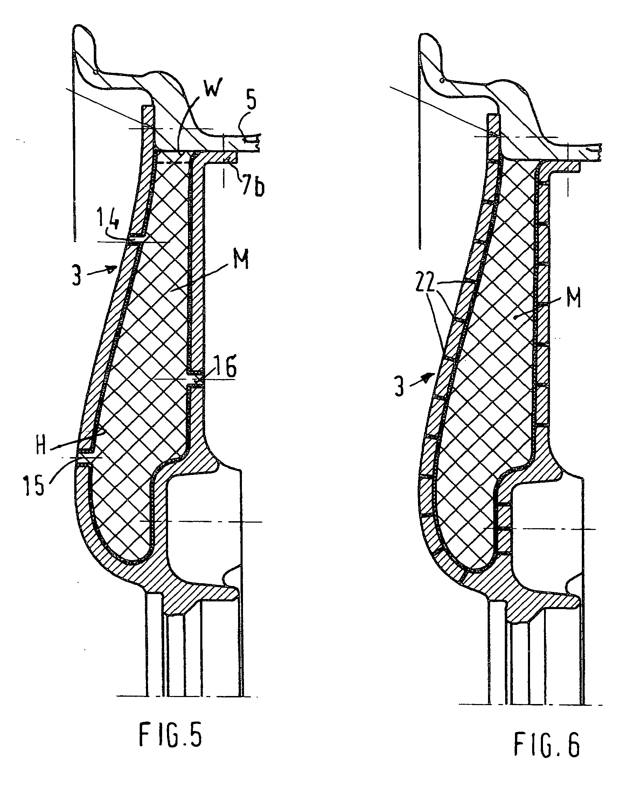

In den Figuren 3 und 4 sind Räder dargestellt, die eine Ausbildung des Felgensterns 3, 4 gemäß der Figuren 1 und 2 aufweisen, aber keinen Metallschaumkern besitzen und in herkömmlicher Weise mit einem Sandkern im Kokillenwerkzeug gegossen werden, der nach dem Gießen entfernt wird. Hierzu können am unteren Ende der Hohlspeiche H zusätzliche Öffnungen vorgesehen sein.

Nach einer weiteren Ausführung können die Hohlspeichen H auch über eine Wandung W abgeschlossen sein, welche sich an eine Fläche F2 der Felge 5 abstützt. Dies kann für alle Ausführungen des Felgensterns 5 alternativ vorgesehen sein und ist beispielsweise in Fig. 5 mit gestrichelten Linien dargestellt.

Im Bereich der aufeinanderliegenden Flächen F1, F2 mit den Ringflächen 6 und 7, 7b bzw. 6 und 7a des Felgensterns 3; 4 ist ein Dichtband 12 zwischengesetzt, daß beim Verbinden der beiden Radteile 3 und 5 bzw. 4 und 5 zwischen diesen eingeklemmt gehalten wird. Das Dichtband 12 kann außenseitig einen Dichtring 11 aufweisen.

In den Figuren 5 und 6 sind zwei Möglichkeiten zur Positionierung des Metallschaumkerns 5 im Kokillenwerkzeug dargestellt. In Figur 5 erfolgt dies über sogenannte Kernmarken 14, 15, 16, die vom Kern des Felgensterns 3, 4 vorstehend und nach dem Gießvorgang in die Wandung des Felgensterns 3, 4 integriert sind.

In Figur 6 sind sogenannte Nadeln am Umfang des Metallschaumkerns M des Felgensterns 3, 4 verteilt angeordnet, was eine sehr genaue Positionierung und Festsetzung in der Wand des Felgensterns 3, 4 gewährleistet.

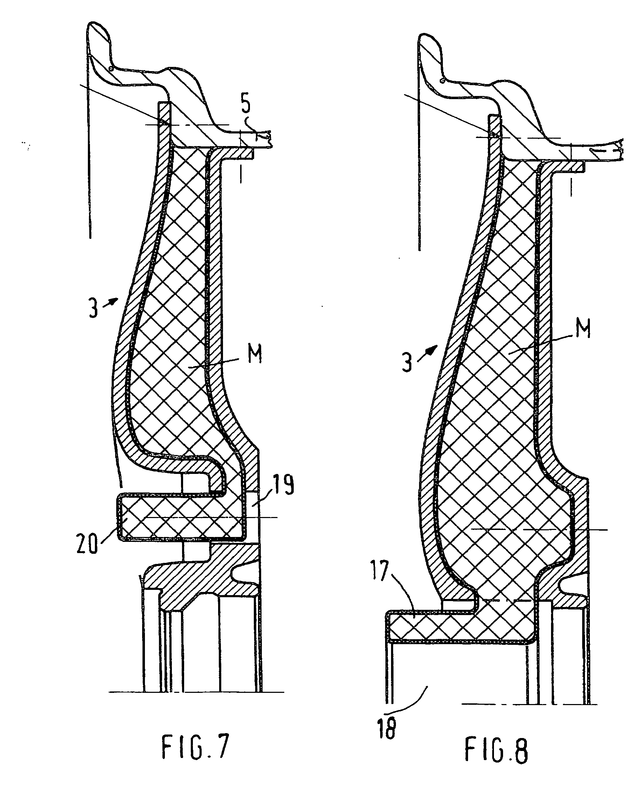

In den Figuren 7 und 8 sind weitere Lagerungsmöglichkeiten des Metallschaumkerns M im Kokillenwerkzeug gezeigt. So ist in Figur 7 ein aus einer Bohrung 19 für eine Befestigungsschraube herausgeführter Ansatz 20 des Kerns M gezeigt und in Figur 8 ist ein anderer Ansatz 17 durch die zentrale Öffnung 18 des Rades zur Abstützung im Kokillenwerkzeug geführt.

In den Figuren 7 und 8 ist diese Lagerungsmöglichkeit an den Ausführungen des Felgensterns 3 gezeigt. Eine gleiche Lagerung kann auch am Felgenstern 4 erfolgen.

## Patentansprüche

1. Mehrteiliges Rad für ein Kraftfahrzeug mit in einem Felgenstern zwischen Luftöffnungen angeordneten hohlen Speichen, die im Felgenstern einen in einem Kokillenwerkzeug lagegenau positionierten und verbleibenden Kern aus einem Metallschaum aufweisen und der Felgenstern eine über eine innenseitige oder außenseitige Wandung des Felgensterns radial vorragende Ringfläche zur Verbindung mit einer Felge aufweist, **dadurch gekennzeichnet, daß** der Felgenstern (3; 4) an seinem Außenrand eine sich radial nach außen erstreckende erste Ringfläche (6) aufweist, welche einer zweiten Ringfläche (7b) beabstandet gegenübersteht, die einen abgewinkelten Ringsteg (7) oder einen geraden Ringsteg (7a) umfaßt und mindestens eine Ringfläche (6, 7, 7a; 7b) mit der Felge (3, 4) über Schraubmittel verbunden ist.

2. Mehrteiliges Rad nach Anspruch 1, **dadurch gekennzeichnet, daß** die Felge (3) eine doppelte Verbindung mit dem Felgenstern (3) aufweist, derart, daß eine Verbindung mit der ersten Ringfläche (6) und eine weitere Verbindung mit der dem abgewinkelten Steg (7b) umfassenden zweiten Ringfläche (7) erfolgt, wobei die Felge (5) eine einen Hump (20) gegenüberliegende winkelige Ringkante (8) mit den Flächen (F1, F2) aufweist, die zum Verbinden mit den Ringflächen (6, 7; 7b) des Felgensterns (3) korrespondierend angeordnet sind.

3. Mehrteiliges Rad nach den Ansprüchen 1 oder 2, **dadurch gekennzeichnet, daß** die Hohlspeiche (H) zwischen den Ringflächen (6, 7) über eine Wandung (W) abgeschlossen ist, die sich an die Fläche (F2) der winkligen Ringkante (8) der Felge (5) anlegt.

4. Mehrteiliges Rad nach den Ansprüchen 1 oder 2, **dadurch gekennzeichnet, daß** die hohlen Speichen (H) des Felgensterns (3; 4) zur Felge (5) hin jeweils eine Öffnung zum Metallschaumkern (M) aufweisen, die über mindestens ein Dichtelement (12) abgeschlossen sind, das zwischen der Winkelfläche (F1, F2) der Felge (3; 4) und einer korrespondierenden Winkelfläche des Felgensterns (3; 4) angeordnet ist und über die Verbindung von mindestens einer Ringfläche (6, 7, 7a) zwischen den Radteilen (3, 5 bzw. 4, 5) eingeklemmt gehalten ist.

5. Mehrteiliges Rad nach einem oder mehreren der vorhergehenden Ansprüche, **dadurch gekennzeichnet, daß** das Dichtelement (12) aus einem umlaufenden Dichtband mit einem innenseitigen Dichtring (11) besteht.

6. Mehrteiliges Rad nach einem oder mehreren der vorhergehenden Ansprüche, **dadurch gekennzeichnet, daß** der Metallschaumkern (M) über an der Umfangsfläche des Kerns verteilt angeordneten Nadeln (22) in der Wandung der Hohlspeiche (H) festgelegt ist.

7. Mehrteiliges Rad nach einem oder mehreren der vorhergehenden Ansprüche, **dadurch gekennzeichnet, daß** der Metallschaumkern (M) über an der Umfangsfläche des Kerns verteilt angeordneten Kernmarken (14, 15, 16) in der Wandung der Hohlspeiche (H) festgelegt ist.

8. Mehrteiliges Rad nach Anspruch 1, **dadurch gekennzeichnet, daß** eine Lagerung des Metallschaumkerns (M) im Kokillenwerkzeug über einen aus der Hohlspeiche (H) im Bereich einer Radmittenöffnung (18) herausgeführten Kernteil (17) erfolgt.

9. Mehrteiliges Rad nach Anspruch 1, **dadurch gekennzeichnet, daß** eine Lagerung des Metallschaumkerns (M) im Kokillenwerkzeug über ein aus der Hohlspeiche (H) im Bereich einer Radschraubenbohrung (19) herausgeführten Kernteil (20) erfolgt.

10. Mehrteiliges Rad für ein Kraftfahrzeug mit in einem Felgenstern zwischen Luftöffnungen angeordneten hohlen Speichen, die im Felgenstern einen herausnehmbaren Sandkern aufweisen und der Felgenstern eine über eine innenseitige oder außenseitige Wandung des Felgensterns radial vorragende Ringflächen zur Verbindung mit der Felge aufweist, **dadurch gekennzeichnet, daß** der Felgenstern (3; 4) an seinem Außenrand eine sich radial nach außen erstreckende erste Ringfläche (6) aufweist, welche einer zweiten Ringfläche (7) beabstandet gegenübersteht, die einen abgewinkelten Ringsteg (7) oder einen geraden Ringsteg (7b) umfaßt und mindestens eine Ringfläche (6, 7, 7a; 7b) mit der Felge (3, 4) über Schraubmittel verbunden ist.

## Claims

1. A multi-part wheel for a motor vehicle, comprising hollow spokes which are arranged in a rim spider between air openings and which have a metal-foam core precisely positioned in a permanent mould and remaining in the rim spider, and the rim spider has an annular surface projecting radially beyond an inner or outer wall of the rim spider for connection to a rim, **characterised in that** the rim spider (3; 4) has, on its outer edge, a first annular surface (6) extending radially outwards and arranged with spacing opposite a second annular surface (7b) comprising a bent annular web (7) or a straight annular web (7a), and at least one annular surface (6, 7, 7a; 7b) is connected to the rim (3, 4) by screw means.

2. A multi-part wheel according to claim 1, **characterised in that** the rim (3) has a double connection to the rim spider (3) such that there is a connection to the first annular surface (6) and a further connection to the second annular surface (7) comprising the bent web (7b), wherein the rim (5) has an angled annular edge (8) lying opposite a hump (20) and provided with surfaces (F1, F2) arranged in a complementary manner for connection to the annular surfaces (6, 7; 7b) of the rim spider (3).

3. A multi-part wheel according to claim 1 or claim 2, **characterised in that** the hollow spoke (H) between the annular surfaces (6, 7) is closed by a wall (W) which comes to rest against the surface (F2) of the angled annular edge (8) of the rim (5).

4. A multi-part wheel according to claim 1 or claim 2, **characterised in that** the hollow spokes (H) of the rim spider (3; 4) each have, in the direction of the rim (5), an opening into the metal-foam core (M), which openings are closed by at least one sealing element (12) which is arranged between the angled surface (F1, F2) of the rim (3; 4) and a corresponding angled surface of the rim spider (3; 4) and is held clamped between the wheel parts (3, 5 or 4, 5) by means of the connection of at least one annular surface (6, 7, 7a).

5. A multi-part wheel according to one or more of the preceding claims, **characterised in that** the sealing element (12) comprises a circumferential sealing band with an inner sealing ring (11).

6. A multi-part wheel according to one or more of the preceding claims, **characterised in that** the metal-foam core (M) is secured in the wall of the hollow spoke (H) by pins (22) distributed over the circumferential surface of the core.

7. A multi-part wheel according to one or more of the preceding claims, **characterised in that** the metal-foam core (M) is secured in the wall of the hollow spoke (H) by core marks (14, 15, 16) distributed over the circumferential surface of the core.

8. A multi-part wheel according to claim 1, **characterised in that** the metal-foam core (M) is mounted in the permanent mould by means of a core part (17) leading out of the hollow spoke (H) in the region of a central wheel opening (18).

9. A multi-part wheel according to claim 1, **characterised in that** the metal-foam core (M) is mounted in the permanent mould by means of a core part (20) leading out of the hollow spoke (H) in the region of a threaded wheel bore (19).

10. A multi-part wheel for a motor vehicle, comprising hollow spokes which are arranged in a rim spider between air openings and which have a removable sand core in the rim spider, and the rim spider has an annular surface projecting radially beyond an inner or outer wall of the rim spider for connection to the rim, **characterised in that** the rim spider (3; 4) has, on its outer edge, a first annular surface (6) extending radially outwards and arranged with spacing opposite a second annular surface (7) comprising a bent annular web (7) or a straight annular web (7b), and at least one annular surface (6, 7, 7a; 7b) is connected to the rim (3, 4) by screw means.

## Revendications

1. Roue en plusieurs parties pour un véhicule automobile, comportant des rayons creux, qui sont agencés entre les ouvertures d'aération dans une étoile de jante et qui contiennent un noyau en mousse métallique positionné avec précision dans le moule en fonte et subsistant dans lesdits rayons, et l'étoile de jante comporte une surface circulaire, en saillie radiale sur une paroi intérieure ou extérieure de l'étoile de jante et destinée à être assemblée avec une jante, **caractérisée en ce que** l'étoile de jante (3 ; 4), sur son bord extérieur, comporte une première surface circulaire (6) orientée radialement vers l'extérieur, qui est située en regard d'une deuxième surface circulaire (7) à distance de celle-ci, laquelle comporte un talon circulaire coudé (7b) ou un talon circulaire droit (7a), et au moins une surface circulaire (6, 7, 7a ; 7b) est assemblée par l'intermédiaire de moyens de vissage avec la jante (5).

2. Roue en plusieurs parties selon la revendication 1, **caractérisée en ce que** la jante (5) comporte un double assemblage avec l'étoile de jante (3), de telle sorte qu'un assemblage est réalisé avec la première surface circulaire (6) et un assemblage supplémentaire est réalisé avec la deuxième surface circulaire (7) comportant le talon coudé (7b), la jante (5) comportant un rebord circulaire (8) de forme angulaire, situé en regard d'un bourrelet circulaire (20) et muni des surfaces (F1, F2) qui sont agencées de manière appropriée pour l'assemblage avec les surfaces circulaires (6, 7 ; 7b) de l'étoile de jante (3).

3. Roue en plusieurs parties selon la revendication 1 ou 2, **caractérisée en ce que** le rayon creux (H) est fermé entre les surfaces circulaires (6, 7) par une paroi (W) qui est en appui sur la surface (F2) du rebord circulaire (8), de forme angulaire, de la jante (5).

4. Roue en plusieurs parties selon la revendication 1 ou 2, **caractérisée en ce que** chacun des rayons creux (H) de l'étoile de jante (3 ; 4) comporte vers la jante (5) une ouverture vers le noyau en mousse métallique (M), laquelle ouverture est fermée par au moins un élément d'étanchéité (12), qui est posé entre la surface angulaire (F1, F2) de la jante (5) et une surface angulaire correspondante de l'étoile de jante (3 ; 4) et qui est maintenu bloqué entre les parties de roues (3, 5 et 4, 5) par l'intermédiaire de l'assemblage d'au moins une surface circulaire (6, 7, 7a).

5. Roue en plusieurs parties selon une ou plusieurs revendications précédentes, **caractérisée en ce que** l'élément d'étanchéité (12) est formé par une bande d'étanchéité avec une bague d'étanchéité (11) du côté intérieur.

6. Roue en plusieurs parties selon une ou plusieurs revendications précédentes, **caractérisée en ce que** le noyau en mousse métallique (M) est fixé dans la paroi du rayon creux (H) par l'intermédiaire d'aiguilles (22) réparties sur la surface périphérique du noyau.

7. Roue en plusieurs parties selon une ou plusieurs revendications précédentes, **caractérisée en ce que** le noyau en mousse métallique (M) est fixé dans la paroi du rayon creux (H) par l'intermédiaire de repères de positionnement (14, 15, 16) répartis sur la surface périphérique du noyau.

8. Roue en plusieurs parties selon la revendication 1, **caractérisée en ce qu'**un positionnement du noyau en mousse métallique (M) dans le moule en fonte est assuré par l'intermédiaire d'une partie de noyau (17) guidée hors du rayon creux (H) dans la zone d'une ouverture centrale (18) de la roue.

9. Roue en plusieurs parties selon la revendication 1, **caractérisée en ce qu'**un positionnement du noyau en mousse métallique (M) dans le moule en fonte est assuré par l'intermédiaire d'une partie de noyau (20) guidée hors du rayon creux (H) dans la zone d'une forure taraudée (19) de la roue.

10. Roue en plusieurs parties pour un véhicule automobile, comportant des rayons creux, qui sont agencés entre les ouvertures d'aération dans une étoile de jante et qui comportent dans l'étoile de jante un noyau de sable pouvant être extrait, et l'étoile de jante comporte une surface circulaire, en saillie radiale sur une paroi intérieure ou extérieure de l'étoile de jante et destinée à être assemblée avec la jante, **caractérisée en ce que** l'étoile de jante (3 ; 4), sur son bord extérieur, comporte une première surface circulaire (6) orientée radialement vers l'extérieur, qui est située en regard d'une deuxième surface circulaire (7) à distance de celle-ci, laquelle comporte un talon circulaire coudé (7b) ou un talon circulaire droit (7a), et au moins une surface circulaire (6, 7, 7a ; 7b) est assemblée par l'intermédiaire de moyens de vissage avec la jante (5).
